# FASCICULE DE BREVET EUROPEEN

(11) **EP 2 831 641 B1**
(45) Date de publication et mention de la délivrance du brevet: **13.05.2020**
(21) Numéro de dépôt: 13713190.0
(22) Date de dépôt: 29.03.2013
(51) Int. Cl.: G01V 3/08, G06F 3/046

(54) **PROCÉDÉ ET DISPOSITIF DE LOCALISATION D'UN OBJET MAGNÉTIQUE**
VERFAHREN UND VORRICHTUNG ZUR LOKALISIERUNG EINES MAGNETISCHEN OBJEKTS
METHOD AND DEVICE FOR LOCATING A MAGNETIC OBJECT

(30) Priorité: 29.03.2012 FR 1252881
(43) Date de publication de la demande: 04.02.2015
(73) Titulaire: Commissariat à l'Énergie Atomique et aux Énergies Alternatives, 75015 Paris (FR)
(72) Inventeur: HAUTSON, Tristan, 38000 Grenoble (FR); ALOUI, Saifeddine, 38000 Grenoble (FR); DAVID, Dominique, 38640 Claix (FR); JOBERT, Timothée, 38000 Grenoble (FR); VASSILEV, Andréa, 38000 Grenoble (FR)
(74) Mandataire: GIE Innovation Competence Group
(86) Numéro de dépôt international: PCT/EP2013/056814
(87) Numéro de publication internationale: WO 2013/144342

(56) Documents cités:
- US-A1- 2002 171 427
- US-A1- 2007 167 703
- US-B1- 6 263 230
- US-B1- 6 269 324
- US-B1- 6 675 123
- RICHARD J KOZICK ET AL: "Algorithms for tracking with an array of magnetic sensors", SENSOR ARRAY AND MULTICHANNEL SIGNAL PROCESSING WORKSHOP, 2008. SAM 2008. 5TH IEEE, IEEE, PISCATAWAY, NJ, USA, 21 juillet 2008 (2008-07-21), pages 423-427, XP031312366, ISBN: 978-1-4244-2240-1

## Description

L'invention concerne un procédé et un dispositif de localisation d'un objet magnétique mobile. L'invention concerne également un écran équipé d'un tel dispositif de localisation.

Des procédés connus de localisation d'un objet magnétique mobile comportent la détermination de la position ou de l'orientation de l'objet magnétique à partir de mesures d'un réseau de magnétomètres tri-axes, ce réseau comportant N magnétomètres tri-axes reliés mécaniquement les uns aux autres sans aucun degré de liberté pour conserver une distance connue entre chacun de ces magnétomètres, où N est un nombre entier supérieur à cinq.

Un magnétomètre tri-axe est un magnétomètre apte à mesurer la projection du champ magnétique sur trois axes de mesure non colinéaires. Un tel magnétomètre mesure la direction du champ magnétique. De plus, généralement, ce magnétomètre mesure également l'amplitude ou la norme du champ magnétique.

Par exemple, un tel procédé est divulgué dans la demande de brevet CN10 136 1660A. L'utilisation d'un réseau de magnétomètres permet de localiser très précisément l'objet magnétique.

Toutefois, l'utilisation simultanée d'un grand nombre de magnétomètres implique qu'il existe un grand nombre de mesures à traiter simultanément, ce qui nécessite une puissance de calcul importante pour localiser l'objet mobile. De plus, l'utilisation d'un réseau de magnétomètres implique une consommation importante puisque chaque magnétomètre de ce réseau est alimenté simultanément.

De l'état de la technique est également connu de :
- US2002/171427A1 qui divulgue les étapes a) et d) des revendications 1 et 12,
- US6263230B1,
- US2007/167703A1,
- US6675123B1,
- Richard J KOZICK et AI : « Algorithm for tracking with an array of magnetic sensors », Sensor array and multichannel signal processing workshop, 2008, SAM 2008, 5th IEEE, Piscataway, NJ, USA, 21 juillet 2008, pages 423-427 ;
- US6269324B1.

L'invention vise à remédier à au moins l'un de ces inconvénients sans modifier voire en améliorant la précision de la localisation de l'objet magnétique. A cet effet, l'invention propose un procédé de localisation d'un objet magnétique conforme à la revendication 1.

Dans le procédé ci-dessus, une partie des mesures des magnétomètres ne sont pas utilisées pour la détermination de la position ou de l'orientation de l'objet magnétique. Ainsi, le nombre de mesures à traiter est réduit, ce qui permet de limiter la puissance de calcul requise. De plus, le déposant s'est aperçu que l'élimination des mesures des magnétomètres les plus proches ne modifie pas, voire même améliore, la précision de la localisation. Ainsi, ce procédé permet de limiter la puissance de calcul tout en conservant la précision de la localisation.

Les modes de réalisation de ce procédé de localisation peuvent comporter une ou plusieurs des caractéristiques des revendications dépendantes.

Ces modes de réalisation présentent en outre les avantages suivants :
- l'élimination des magnétomètres les plus proches par comparaison au seuil S_{b} permet d'adapter automatiquement le nombre de mesures prises en compte pour la localisation de l'objet magnétique sans pour autant nuire à la précision de cette localisation ;
- fixer le seuil S_{b} à deux fois la plus grande dimension de l'objet magnétique permet d'accroître la précision de la localisation en éliminant les mesures pour lesquelles l'approximation de l'objet magnétique par un dipôle magnétique est insuffisamment précise ;
- l'utilisation d'un nombre constant Nᵢ de magnétomètres les plus proches à éliminer permet d'éviter l'utilisation du seuil Sb;
- l'élimination des magnétomètres saturés permet d'accroître la précision de la localisation de l'objet magnétique ;
- l'élimination des magnétomètres les plus éloignés permet d'accélérer la localisation de l'objet magnétique sans modifier sensiblement la précision de cette localisation ;
- la non-alimentation ou la diminution de la fréquence de réalisation de mesure par les magnétomètres éliminés permet de diminuer la consommation électrique du réseau de magnétomètres.

L'invention a également pour objet un dispositif de localisation d'un objet magnétique mobile conforme à la revendication 12.

Les modes de réalisation de ce dispositif de localisation peuvent comporter la caractéristique de la revendication 13.

L'invention sera mieux comprise à la lecture de la description qui va suivre, donnée uniquement à titre d'exemple non limitatif et faite en se référant aux dessins, sur lesquels :
- la figure 1 est une illustration schématique d'une interface homme/machine permettant de commander un appareil électronique,
- la figure 2 est une illustration partielle en vue de dessus d'un réseau de magnétomètres mis en œuvre dans l'interface homme/machine de la figure 1 ;
- la figure 3 est un organigramme d'un procédé de localisation d'un objet magnétique mobile à l'aide de l'interface homme/machine de la figure 1, et
- la figure 4 est une illustration schématique et en perspective d'un écran incorporant une interface homme/machine similaire à celle de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

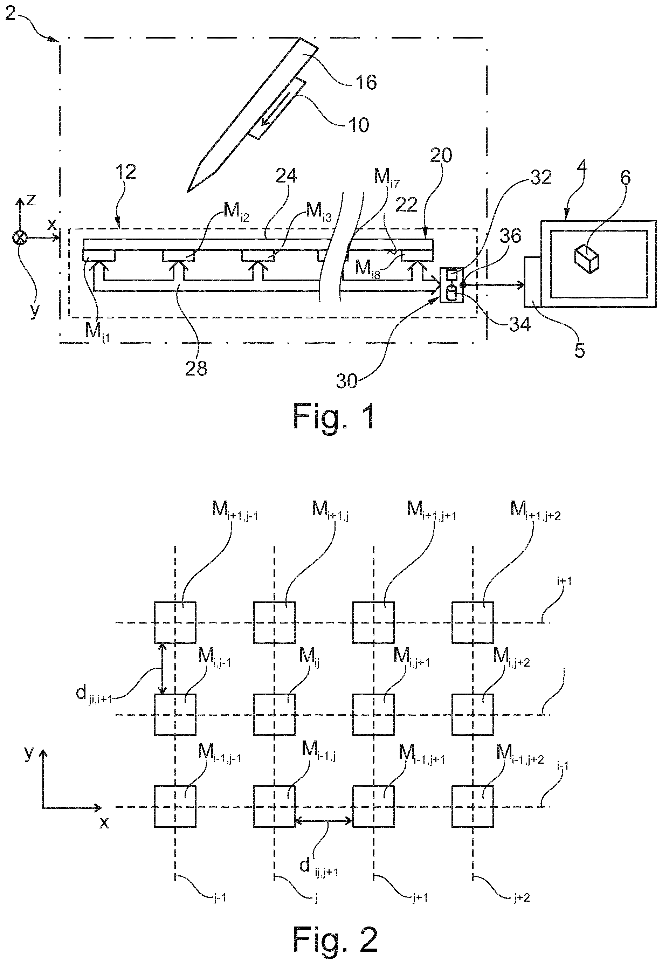

La figure 1 représente une interface homme/machine 2 permettant de commander un appareil électronique 4. Ici, l'appareil 4 est un écran raccordé à une unité de commande 5 capable de commander l'affichage d'une image sur cet écran 4.

Ici, le fonctionnement de l'interface homme/machine 2 est illustré dans le cas où l'unité 5 commande la position et l'orientation d'un curseur 6 sur l'écran 4. Par exemple, le curseur a une forme tridimensionnelle. Sur la figure 1, le curseur 6 est un parallélépipède. Toutefois, l'interface 2 est utilisable dans de nombreuses autres applications comme cela est décrit à la fin de cette description.

L'interface 2 comporte un objet magnétique 10 et un dispositif 12 de localisation de cet objet 10. L'objet 10 est librement déplaçable dans un repère orthogonal XYZ fixé sans aucun degré de liberté au dispositif 12. Ici, les directions X et Y sont horizontales et la direction Z est verticale.

Par exemple, l'objet 10 est un aimant permanent présentant un moment magnétique non nul même en absence de champ magnétique extérieur. Par exemple, le champ magnétique coercitif de cet aimant est supérieur à 100 A.m⁻¹ ou 500 A.m⁻¹. Par exemple, il est réalisé en matériau ferro- ou ferrimagnétique.

L'objet 10 a une forme oblongue. Sur la figure 1, la direction du moment magnétique de l'objet 10 est représentée par une flèche parallèle à la direction longitudinale de cet objet. La plus grande longueur de cet objet est notée L par la suite. La puissance de l'aimant permanent est typiquement supérieure à 0,01 A.m² ou 0,1 A.m².

Dans ce mode de réalisation, l'objet 10 est fixé sans aucun degré de liberté sur un ustensile 16 non magnétique. Par non magnétique, on entend un ustensile réalisé dans un matériau ne présentant aucune propriété magnétique mesurable.

Par exemple, l'ustensile 16 est un crayon en bois ou en plastique. L'ustensile 16 peut être localisé à partir de la position de l'objet 10. L'ustensile 16 permet aussi de faciliter la manipulation de l'objet 10 si celui-ci est petit. Typiquement, la combinaison de l'objet 10 et de l'ustensile 16 est librement déplaçable directement par la main d'un être humain dans le repère XYZ. A cet effet, cette combinaison pèse moins d'un kilo et, de préférence, moins de 200g. Les dimensions de cette combinaison sont suffisamment réduites pour pouvoir être saisie et déplacée par une seule main d'un utilisateur.

Le dispositif 12 permet de localiser l'objet 10 dans le repère XYZ. Par localisation, on entend ici la détermination de la position x, y, z de l'objet 10 dans le repère XYZ et aussi la détermination de l'orientation de l'objet 10 par rapport aux axes X, Y et Z du repère XYZ. Par exemple, l'orientation de l'objet 10 est représentée par les angles θₓ, θ_{y} et θ_{z} du moment magnétique de l'objet 10, respectivement, par rapport aux axes X, Y et Z du repère.

Le dispositif 12 comporte un réseau de N magnétomètres tri-axes Mᵢⱼ. Sur la figure 1, les traits ondulés verticaux indiquent qu'une partie du dispositif 12 n'a pas été représentée.

Typiquement, N est supérieur à cinq et, de préférence, supérieur à seize ou trente-deux. Ici, N est supérieur ou égal à soixante-quatre.

Dans ce mode de réalisation, les magnétomètres Mᵢⱼ sont alignés en lignes et en colonnes pour former une matrice. Ici, cette matrice comporte huit lignes et huit colonnes. Les indices i et j identifient, respectivement, la ligne et la colonne de cette matrice à l'intersection de laquelle se trouve le magnétomètre Mᵢⱼ. Sur la figure 1, seuls les magnétomètres Mᵢ₁, Mᵢ₂, Mᵢ₃, Mᵢ₄ et Mᵢ₈ d'une ligne i sont visibles. La position des magnétomètres Mᵢⱼ les uns par rapport aux autres est décrite plus en détail en référence à la figure 2.

Chaque magnétomètre Mᵢⱼ est fixé sans aucun degré de liberté aux autres magnétomètres. A cet effet, les magnétomètres Mᵢⱼ sont fixés sans aucun degré de liberté sur une face arrière 22 d'une plaque rigide 20. Cette plaque rigide présente une face avant 24 tournée vers l'objet 10. La plaque 20 est réalisée dan un matériau non magnétique rigide. Par exemple, la plaque 20 est en verre.

Chaque magnétomètre Mᵢⱼ mesure la direction et l'intensité du champ magnétique généré par l'objet 10. Pour cela, chaque magnétomètre Mᵢⱼ mesure la norme de la projection orthogonale du champ magnétique généré par l'objet 10 au niveau de ce magnétomètre Mᵢⱼ sur trois axes de mesure de ce magnétomètre. Ici, ces trois axes de mesure sont orthogonaux entre eux. Par exemple, les axes de mesure de chacun des magnétomètres Mᵢⱼ sont, respectivement, parallèles aux axes X, Y et Z du repère. La sensibilité du magnétomètre Mᵢⱼ est par exemple de 4^{∗}10⁻⁷T.

Chaque magnétomètre Mᵢⱼ est raccordé par l'intermédiaire d'un bus 28 de transmission d'informations à une unité de traitement 30.

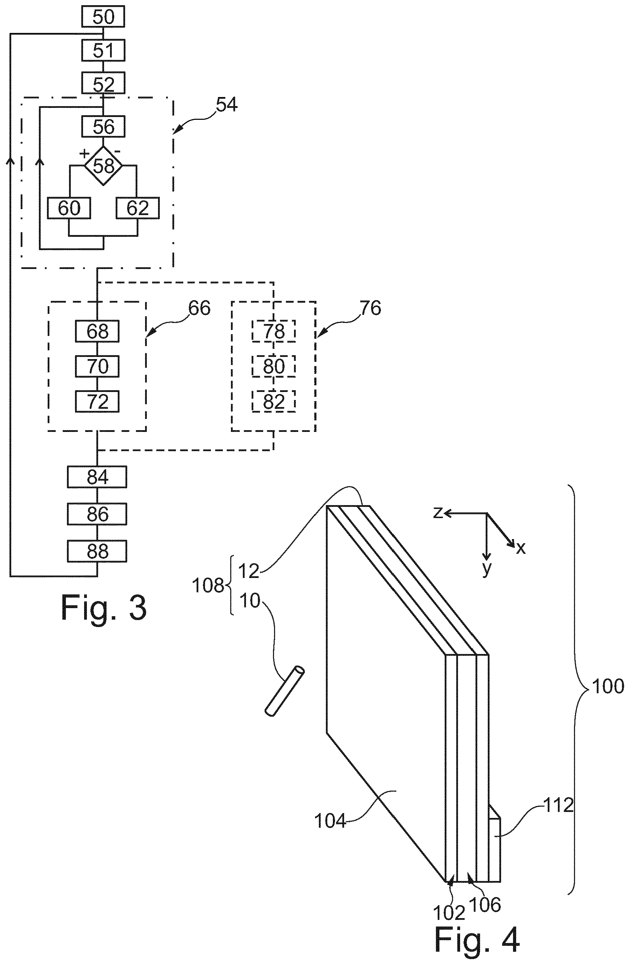

L'unité de traitement 30 est capable de déterminer la position et l'orientation de l'objet 10 dans le repère XYZ à partir des mesures des magnétomètres Mᵢⱼ. A cet effet, l'unité 30 comporte un calculateur électronique 32 programmable apte à exécuter des instructions enregistrées sur un support d'enregistrement d'informations. L'unité 30 comporte donc aussi une mémoire 34 contenant les instructions nécessaires pour l'exécution par le calculateur 32 du procédé de la figure 3. En particulier, l'unité 30 implémente un modèle mathématique associant chaque mesure d'un magnétomètre Mᵢⱼ à la position et à l'orientation de l'objet 10 dans le repère XYZ. Ce modèle est implémenté sous la forme d'un filtre de Kalman étendu. Ce modèle est typiquement construit à partir des équations physiques de l'électromagnétisme. Pour construire ce modèle, l'objet 10 est approximé par un dipôle magnétique. Cette approximation n'introduit que très peu d'erreurs si la distance entre l'objet 10 et le magnétomètre Mᵢⱼ est supérieure à 2L et, de préférence, supérieure à 3L, où L est la plus grande dimension de l'objet 10. Typiquement, L est inférieur à 20cm et, de préférence, inférieur à 10 ou 5cm.

L'unité 30 est également capable de restituer la position et l'orientation mesurée de l'objet 10 sur une interface 36.

L'unité 5 de commande est raccordée à l'unité 30 par l'intermédiaire de cette interface 36.

La figure 2 représente une partie des magnétomètres Mᵢⱼ du dispositif 12. Ces magnétomètres Mᵢⱼ sont alignés en lignes i parallèles à la direction X. Ces magnétomètres sont également alignés en colonnes j parallèles à la direction Y pour former une matrice. Les lignes i et les colonnes j sont disposées dans l'ordre des indices croissants.

Le centre du magnétomètre Mᵢⱼ se trouve à l'intersection de la ligne i et de la colonne j. Le centre du magnétomètre correspond au point où le champ magnétique est mesuré par ce magnétomètre. Ici, les indices i et j appartiennent à l'intervalle [1 ; 8].

Les centres de deux magnétomètres Mᵢⱼ et M_{i,j+1} immédiatement consécutifs le long d'une ligne i sont séparés par une distance connue d_{i,j},ⱼ₊₁. De façon similaire, le centre de deux magnétomètres Mᵢⱼ et M_{i+1,,j} immédiatement consécutifs le long d'une même colonne j sont séparés par une distance connue d_{j,i},ᵢ₊₁.

Dans le cas particulier décrit ici, quelle que soit la ligne i, la distance d_{i,j},ⱼ₊₁ est la même. Cette distance est donc notée dⱼ. De façon similaire, quelle que soit la colonne j, la distance d_{j,i},ᵢ₊₁ entre deux magnétomètres est la même. Cette distance est donc notée dᵢ.

Ici, les distances dᵢ et dⱼ sont toutes les deux égales à d.

Typiquement, la distance d est comprise entre 1 et 4 cm lorsque :
- la puissance de l'aimant permanent est de 0,5 A.m²,
- la sensibilité des magnétomètres est de 4^{∗}10⁻⁷T, et
- le nombre de magnétomètres Mᵢⱼ est de soixante-quatre.

Le fonctionnement de l'interface 2 va maintenant être décrit en référence au procédé de la figure 3.

Initialement, lors d'une étape 50, le filtre de Kalman étendu est initialisé en faisant l'hypothèse que l'objet 10 est au centre du réseau de magnétomètres et en prenant une orientation quelconque fixée pour cet objet 10. Par exemple, initialement, on considère que l'objet 10 est horizontal.

Lors d'une étape 51, les magnétomètres saturés par le champ magnétique de l'objet 10 sont éliminés. Un magnétomètre saturé est un magnétomètre dont la mesure ne varie plus si l'on approche encore plus l'objet 10 de ce magnétomètre. Lorsqu'un magnétomètre est saturé, il délivre un signal de mesure caractéristique connu différent de ceux susceptibles d'être délivrés lorsqu'il n'est pas saturé. Dès lors, lors de l'étape 51, le calculateur 32 identifie les magnétomètres saturés à partir du signal de mesure délivré par chacun d'entre eux. Les magnétomètres identifiés comme « saturés » sont marqués comme étant éliminés. Par exemple, à cet effet, un identifiant de ce magnétomètre est ajouté dans une liste de magnétomètres éliminés. Dans cette description, un magnétomètre identifié comme étant éliminé est dit « éliminé ».

Lors d'une étape 52, la position de l'objet 10 est estimée. Cela consiste à trouver des valeurs approchant d'aussi prêt que possible la position réelle de l'objet 10. Ainsi, à chaque fois que l'objet 10 se déplace, l'estimation de sa nouvelle position varie pour rester proche de la position réelle. Ici, cette estimation consiste à prendre la position précédemment déterminée.

Ensuite, lors d'une étape 54, les magnétomètres Mᵢⱼ les plus proches de la position estimée sont identifiés.

Dans ce mode de réalisation lors de l'étape 54, le magnétomètre Mᵢⱼ est considéré comme faisant partie des magnétomètres les plus proches de la position estimée si la distance eᵢⱼ qui le sépare de la position estimée est inférieure à un seuil prédéterminé S_{b}. La valeur du seuil S_{b} est supérieure ou égale à 2L et, de préférence, supérieure ou égale à 3L. De plus, la valeur de ce seuil est choisie suffisamment petite pour que quelle que soit la position de l'objet 10 par rapport au dispositif 12, la totalité des magnétomètres Mᵢⱼ ne soient jamais comprise dans une sphère de rayons Sb centré sur l'objet 10. Par exemple, de préférence, la valeur du seuil S_{b} est choisie inférieure à la moitié de la distance entre les deux magnétomètres Mᵢⱼ les plus éloignés l'un de l'autre dans le réseau. Par exemple, ici, la valeur du seuil S_{b} est choisie égale à 3L.

Lors d'une opération 56, pour chaque magnétomètre Mᵢⱼ, la distance eᵢⱼ entre ce magnétomètre et la position estimée est calculée.

Ensuite, lors d'une opération 58, la distance eᵢⱼ calculée est comparée au seuil S_{b}. Si la distance eᵢⱼ est inférieure au seuil S_{b}, alors, lors d'une opération 60, ce magnétomètre Sᵢⱼ est identifié comme faisant partie des magnétomètres les plus proches de la position estimée. Ce magnétomètre est alors éliminé.

Si la distance eᵢⱼ est supérieure au seuil S_{b}, le magnétomètre Mᵢⱼ n'est pas identifié et n'est pas non plus éliminé.

Les opérations 56 à 62 sont réitérées pour chaque magnétomètre Mᵢⱼ.

A l'issue de l'étape 54, tous les magnétomètres pour lesquels la distance eᵢⱼ est inférieure au seuil S_{b} ont été éliminés.

Ensuite, lors d'une étape 66, le calculateur 32 identifie les magnétomètres Mᵢⱼ qui sont les plus éloignés de la position estimée de l'objet 10. Les magnétomètres les plus éloignés sont les magnétomètres, choisis uniquement parmi les magnétomètres qui n'ont pas déjà précédemment été éliminés, qui n'appartiennent pas au groupe des Nₚ magnétomètres les plus proches de la position estimée, où Nₚ est un entier prédéterminé strictement inférieure à N. De préférence, Nₚ est supérieure à dix ou vingt.

Cette étape 66 consiste donc à sélectionner uniquement les magnétomètres les plus proches de la position estimée parmi ceux qui n'ont pas déjà été éliminés. Pour cela, lors d'une opération 68, les magnétomètres Mᵢⱼ non encore éliminés sont classés par ordre croissant ou décroissant en fonction de leur distance eᵢⱼ. Lors de l'opération 68, les distances eᵢⱼ calculées pour les différents magnétomètres sont comparées les unes aux autres.

Ensuite, lors d'une opération 70, le calculateur sélectionne les Nₚ magnétomètres associés aux distances eᵢⱼ les plus petites. En faisant cela, le calculateur sélectionne uniquement les Nₚ magnétomètres les plus proches de la position estimée parmi ceux qui n'ont pas été éliminés lors de l'étape 54.

Lors d'une opération 72, les magnétomètres non sélectionnés lors de l'opération 70 sont éliminés.

Éventuellement, en parallèle ou à la place de l'étape 70, lors d'une étape 76, les magnétomètres Mᵢⱼ qui n'appartiennent pas au groupe des Nₙ magnétomètres mesurant le champ magnétique de plus grande norme sont éliminés, où Nₙ est un entier supérieure à dix ou vingt et strictement inférieure à N.

Pour cela, lors d'une opération 78, les magnétomètres non encore éliminés Mᵢⱼ sont classés par ordre croissant ou décroissant de norme du champ magnétique mesuré par ces magnétomètres.

Ensuite, lors d'une opération 80, le calculateur 32 sélectionne les Nₙ premiers magnétomètres dans cette liste de magnétomètres classés par ordre décroissant de norme du champ magnétique mesuré. Par conséquent, en faisant cela, le calculateur 32 sélectionne les Nₙ magnétomètres non encore éliminés et mesurant le plus de signal.

Lors d'une opération 82, les magnétomètres non sélectionnés lors de l'opération 80 sont éliminés.

Ensuite, lors d'une étape 84, le champ magnétique de l'objet 10 est mesuré à l'aide des seuls magnétomètres non éliminés lors des précédentes étapes. De préférence, lors de l'étape 84, les magnétomètres éliminés ne sont pas alimentés de manière à économiser de l'énergie.

Lors d'une étape 86, le calculateur 32 détermine la position et l'orientation de l'objet 10 en utilisant les seules mesures des magnétomètres non éliminés. Par exemple, il élimine du filtre de Kalman étendu les équations contenant des mesures provenant de magnétomètres éliminés. Ensuite, il met en œuvre ce filtre de Kalman pour trouver les nouvelles position et orientation de l'objet 10. A l'issue de l'étape 86, le calculateur 32 restitue sur l'interface 36, la position et l'orientation déterminées pour l'objet 10. Si l'objet 10 s'est déplacé, la position et l'orientation déterminées à l'issue de l'étape 86 sont plus précises que celles estimées lors de l'étape 52.

Lors d'une étape 88, l'unité 5 commande l'affichage du curseur 6 sur l'écran 4 en fonction de la position et de l'orientation déterminées lors de l'étape 86. A l'issue de l'étape 88, on retourne à l'étape 51.

La limitation du nombre de mesures utilisées lors de l'étape 86 permet de limiter la puissance de calcul nécessaire à la localisation de l'objet 10. Cette limitation de la puissance de calcul peut alors être mise à profit, par exemple, pour accroître la précision de la localisation en traitant d'avantage de mesures dans le même laps de de temps ou pour accroître la vitesse de calcul et donc pour localiser plus rapidement l'objet 10. De plus, cette limitation du nombre de mesures ne conduit pas à une diminution de la précision de la localisation puisque seules les mesures potentiellement erronées c'est-à-dire celles des magnétomètres les plus proches de la position estimée ou les mesures correspondant aux signaux les plus faibles sont éliminées.

La figure 4 représente un écran 100 tel qu'un écran de téléviseur. Cet écran 100 comporte une dalle 102 en matériau transparent à la lumière visible. Par exemple, la dalle 102 est en verre. Cette dalle présente une face avant 104 tournée vers le spectateur et une face arrière. Ici, la face avant est perpendiculaire à la direction Z qui est dirigée vers le spectateur. Dans la suite de cette description, l'avant et l'arrière de l'écran 100 sont définis par rapport à cette direction Z.

L'écran 100 comporte également une couche 106 de génération de photons pour former chaque pixel sur la dalle 102. Cette couche 106 est placée immédiatement derrière la dalle 102. Différentes technologies sont possibles pour réaliser cette couche 106. De préférence, la technologie retenue consiste en une couche dépourvue de grille métallique. Typiquement, la couche 106 est réalisée à partir de diodes électroluminescentes organiques plus connues sous l'acronyme anglais OLED (Organic Light Emitting Diode).

Enfin, l'écran 100 comporte une interface homme/machine 108. Cette interface est identique à l'interface 2 sauf que l'objet magnétique 10 n'est ici attaché à aucun ustensile. L'objet 10 est placé du côté de la face avant 104 lors de l'utilisation de cette interface 108.

Le dispositif 12 de localisation est quant à lui placé derrière la couche 106. Les lignes i et les colonnes j du réseau de magnétomètres s'étendent parallèlement à la face 104. De préférence, la longueur de la diagonale entre les magnétomètres les plus éloignés du réseau est égale à la diagonale de la face avant 104 à plus ou moins 15 % près ou 5 % près.

Une unité de commande 112 est raccordée à l'interface 36 du dispositif 12. Cette unité 112 est apte à commander la couche 106 pour modifier l'affichage en fonction de la position et/ou de l'orientation acquise par l'interface homme/machine 108. Par exemple, l'unité 112 commande un changement de la chaîne de télévision regardée, un retour en arrière ou une avance rapide ou un agrandissement de l'image en fonction de la position et de l'orientation acquise par l'interface 108. Typiquement, l'unité 112 est capable d'effectuer les commandes classiques appliquées sur un écran mais ici, ces commandes sont déclenchées en réponse à un déplacement de l'objet 10.

On notera que dans le cas décrit ici, la zone d'interaction avec l'écran s'étend au-delà, dans les directions X et Y, de la face avant 104. En effet, la position de l'objet 10 est mesurable même si celui-ci est placé à gauche ou à droite de l'écran dans les directions X ou Y.

De nombreux autres modes de réalisation sont possibles. Par exemple, l'appareil électronique peut être un écran d'ordinateur, d'un téléphone portable ou d'une tablette électronique. L'appareil électronique commandé à partir de l'interface homme/machine 12 ou 108 peut également être différent d'un écran. Par exemple, l'appareil électronique peut être un appareil d'acquisition d'un texte ou d'un dessin manuscrit. Dans ce cas, l'objet 10 est fixé sans aucun degré de liberté sur un crayon. L'unité de commande 5 comprend un module pour localiser la pointe du crayon par rapport à la plaque 20 et pour mémoriser chaque position de la pointe lorsque celle-ci est en contact avec la plaque 20. Dans ces conditions, l'unité 5 permet de créer un fichier contenant la trace laissée par la pointe du crayon sur la face supérieure 24.

L'interface homme/machine peut être utilisée pour commander d'autres fonctions d'un écran que la simple position et orientation d'un curseur. Par exemple, l'interface homme/machine peut être utilisée pour déclencher un agrandissement d'une image quand l'objet magnétique se rapproche de la plaque 20 et, inversement, un rétrécissement de l'image quand l'objet magnétique s'éloigne de la plaque 20.

L'objet magnétique n'est pas nécessairement un aimant permanent. En variante, l'objet magnétique est simplement capable de modifier les lignes d'un champ magnétique dans lequel il est plongé. Par exemple, l'objet magnétique acquiert un moment magnétique non nul en présence d'un champ magnétique ambiant tel que le champ magnétique terrestre. Par exemple, l'objet magnétique est une pièce ou un barreau en matériau paramagnétique ou diamagnétique. L'objet magnétique peut aussi être une pièce ou un barreau en matériau ferromagnétique doux c'est-à-dire dont le champ magnétique coercitif et strictement inférieur à 100 A.m⁻¹ ou en matériau ferrimagnétique.

Si la surface du réseau de magnétomètres est suffisamment étendue, l'appareil 2 peut comporter simultanément plusieurs objets magnétiques 10. Dans ce cas, le procédé décrit ci-dessus est appliqué, en parallèle, pour chacun de ces objets magnétiques. La liste des magnétomètres éliminés est alors propre à chaque objet magnétique.

La tablette 20 peut avoir des formes très variées. Par exemple, la tablette 20 est un tableau sur lequel un utilisateur peut écrire avec une craie ou un feutre.

L'unité 30 de traitement peut être incorporée physiquement à l'intérieur de l'appareil commandé au lieu d'être incorporé à l'intérieur de l'interface homme/machine.

En variante, l'unité de commande sélectionne l'algorithme utilisé lors de l'étape 86 pour déterminer la position et/ou l'orientation de l'objet 10 en fonction de la position estimée lors de l'étape 52. Par exemple, si l'objet 10 est très proche du réseau de magnétomètres et que son moment magnétique est vertical, le modèle reliant les mesures des magnétomètres à la position et à l'orientation de l'objet 10 est modifié. Dans ce cas, la modification consiste par exemple à fixer la valeur du moment magnétique de l'objet 10 selon l'axe Z.

D'autres variantes de l'algorithme pour déterminer la position et/ou l'orientation de l'objet 10 sont possibles. Par exemple, les mesures des magnétomètres sont d'abord utilisées pour construire une empreinte magnétique de l'objet 10. L'empreinte construite est ensuite comparée à une base de données d'empreintes magnétiques prédéterminées d'objets connus. Cette base de données associe à chaque objet connu des informations complémentaires comme, par exemple, la valeur de son moment magnétique. Si l'empreinte construite correspond à l'une de celles de la base de données, les informations complémentaires associées à cet objet connu sont alors utilisées pour améliorer ou simplifier la localisation de cet objet lors de l'étape 86.

L'approximation utilisée pour construire le filtre de Kalman peut aussi être une approximation quaternaire ou supérieure, c'est-à-dire que les équations de l'électromagnétisme sont approximées à un ordre supérieur à celui correspondant à l'approximation dipolaire.

Les magnétomètres du réseau de magnétomètres ne sont pas nécessairement rangés en colonnes et en lignes. Ils peuvent être agencés aussi selon d'autres motifs. Par exemple, les magnétomètres sont disposés sur chaque sommet de chaque maille triangulaire ou hexagonale d'un maillage d'un plan.

La disposition des magnétomètres les uns par rapport aux autres peut aussi être aléatoire ou non régulière. Ainsi, la distance entre deux magnétomètres immédiatement consécutifs dans le réseau n'est pas nécessairement la même pour toutes les paires de deux magnétomètres immédiatement consécutifs. Par exemple, la densité de magnétomètres dans une zone donnée du réseau peut être plus importante qu'ailleurs. Augmenter la densité dans une zone donnée peut permettre d'augmenter la précision de la mesure dans cette zone. Il est aussi possible de prévoir des zones de densité plus importante sur la périphérie du réseau pour limiter les effets de bord. Par exemple, le réseau de magnétomètres peut comporter une zone centrale dépourvue de magnétomètre. Dans ce cas, les magnétomètres sont uniquement répartis sur la périphérie de cette zone centrale et forment une bande de magnétomètres qui entoure et délimite la zone centrale. Typiquement, la largeur de cette bande est strictement inférieure à la largeur de la zone centrale mesurée selon la même direction.

Cette répartition non uniforme des magnétomètres peut être appliquée pour créer une variante de l'écran 100. Dans cette variante, les magnétomètres du dispositif 12 de localisation ne sont pas entièrement placés derrière la couche 106 de génération de photons. Par exemple, les magnétomètres Mᵢⱼ sont essentiellement disposés autour de la couche 106. Dans ce cas, ces magnétomètres Mᵢⱼ définissent une bande de magnétomètres qui entoure une zone dépourvue de magnétomètre ou de densité plus faible en magnétomètres. Cette bande de magnétomètres peut être fixée directement sur la dalle 102.

En variante, le réseau de magnétomètres ne s'étend que dans une seule direction. Les magnétomètres sont alors disposées les uns après les autres le long d'une seule et même ligne.

A l'inverse, le réseau de magnétomètre peut aussi s'étendre dans trois directions non colinéaires de l'espace. Dans ces conditions, les magnétomètres sont répartis à l'intérieur d'un volume à trois dimensions.

Le nombre N de magnétomètres peut également être supérieur ou égal à soixante-quatre ou quatre-vingt dix.

Tous les magnétomètres du réseau de magnétomètres ne sont pas nécessairement identiques les uns aux autres. En variante, les magnétomètres n'ont pas tous la même sensibilité. Dans ce cas, les magnétomètres moins précis sont par exemple disposés à proximité du centre du réseau tandis que les magnétomètres les plus précis sont disposés sur la périphérie de ce réseau. Un tel mode de réalisation présente l'avantage de placer les magnétomètres les plus difficilement saturables et donc les moins sensibles, aux emplacements susceptibles d'être le plus proche de l'objet magnétique. Cela permet aussi d'étendre la zone d'interaction.

En variante, différentes méthodes pour éliminer les magnétomètres les plus éloignés de la position estimée peuvent être combinées. Par exemple, les étapes 66 et 76 sont toutes les deux mises en œuvre pour ne retenir que les magnétomètres à la fois proches et qui mesurent le plus de signal. Dans une autre variante, l'élimination des magnétomètres les plus éloignés de la position estimée ou mesurant la norme du champ magnétique la plus faible peut aussi être omise.

Dans un exemple non couvert par l'invention, l'élimination des magnétomètres les plus proches de la position estimée peut aussi être omise lorsque cela n'est pas nécessaire. Par exemple, cela n'est pas nécessaire lorsque la distance qui sépare les magnétomètres de l'objet dont la position doit être mesurée est nécessairement supérieure, par exemple par construction mécanique, à la distance pour laquelle l'approximation dipolaire est acceptable. Dans un exemple non couvert par l'invention, dans ce cas, seule l'élimination des magnétomètres les plus éloignés est mise en œuvre.

L'élimination des magnétomètres saturés peut être réalisée à d'autres instants. Par exemple, elle peut être réalisée après l'étape 54, 66 ou 76. L'élimination des magnétomètres saturés peut aussi être omise.

En variante, plutôt que de ne pas alimenter les magnétomètres éliminés pour économiser de l'énergie, il est possible de régler la fréquence d'acquisition fₐ d'une nouvelle mesure par ces magnétomètres éliminés sur une valeur Vfₑ strictement inférieure à la valeur Vfₙₑ de la fréquence d'acquisition d'une nouvelle mesure par les magnétomètres non éliminés. Par exemple, la valeur Vfₑ est choisie deux ou dix fois inférieure à la valeur Vfₙₑ. En effet, typiquement, chaque magnétomètre comporte un convertisseur analogique-numérique qui convertit la grandeur physique analogique représentative du champ magnétique mesuré en une valeur numérique. La fréquence d'acquisition fₐ correspond à la fréquence d'échantillonnage de ce convertisseur analogique-numérique. Dès lors, en limitant la fréquence d'acquisition fₐ, on limite la fréquence d'échantillonnage ce qui limite aussi la consommation électrique du magnétomètre. Pour les magnétomètres non-éliminés, la valeur Vfₙₑ est choisie égale ou inférieure à la valeur Vfₑₓₑ de la fréquence d'exécution de l'étape 86. Ainsi, si l'objet magnétique se déplace, les nouvelles mesures des magnétomètres non-éliminés prennent en compte ce déplacement. Pour les magnétomètres éliminés, puisque leur mesure ne sont pas prises en compte lors de l'étape 86, il n'est pas nécessaire que la valeur Vfₑ soit inférieure à la valeur Vfₑₓₑ. Ceci est mis à profit dans cette variante pour limiter la consommation électrique des magnétomètres éliminés sans arrêter de les alimenter. Par exemple, la valeur Vfₑ est réglée pour être deux ou dix fois supérieure à la valeur Vfₑₓₑ.

De nombreuse méthodes différentes sont utilisables pour déterminer la position et l'orientation de l'objet magnétique. Par exemple, la méthode décrite dans US6269324 est utilisable. Ces méthodes n'utilisent pas nécessairement un filtre de Kalman. Par exemple, les méthodes décrites dans US2002/171427A1 ou US6263230B1 sont possibles. Dans une autre variante, seule la position ou seule l'orientation de l'objet magnétique est déterminée.

Les différents traitements décrits ici peuvent être réalisés en post-traitement, c'est-à-dire que dans un premier temps toutes les données mesurées sont enregistrées dans une mémoire, puis l'élimination des mesures de certains magnétomètres est mise en œuvre ultérieurement lors du traitement des données enregistrées.

Dans un autre mode de réalisation, l'estimation de la position de l'objet magnétique lors de l'étape 52 est obtenue à partir d'une mesure d'un autre capteur distinct de ceux appartenant au réseau de magnétomètres. Cet autre capteur est, de préférence, insensible au champ magnétique. Par exemple, il s'agit d'une caméra associée à un module de reconnaissance de forme pour estimer la position de l'objet par rapport au réseau de magnétomètres.

Dans un exemple non couvert par l'invention, l'étape 51 d'élimination des magnétomètres saturés peut aussi être mise en œuvre sans les autres étapes d'élimination de magnétomètres.

Dans un exemple non couvert par l'invention, l'écran 100 décrit ici peut être mis en œuvre avec d'autres procédés de localisation de l'objet magnétique que celui décrit en référence à la figure 3. En particulier, dans un exemple non couvert par l'invention, le procédé de localisation utilisé ne met pas nécessairement en œuvre l'identification et l'élimination des magnétomètres les plus proches de l'objet magnétique.

## Revendications

1. Procédé de localisation d'un objet magnétique mobile, ce procédé comportant la détermination de la position ou de l'orientation de l'objet magnétique à partir de mesures d'un réseau de magnétomètres tri-axes, ce réseau comportant N magnétomètres tri-axes reliés mécaniquement les uns aux autres sans aucun degré de liberté pour conserver une distance connue entre chacun de ces magnétomètres, où N est un nombre entier supérieur à cinq,
dans lequel ce procédé comporte la réitération des étapes suivantes:
a) l'estimation (52) de la position de l'objet magnétique par rapport au réseau de magnétomètres à partir de mesures des magnétomètres réalisées lors d'une précédente itération ou à partir d'une mesure d'un capteur distinct des magnétomètres du réseau de magnétomètres de sorte que cette estimation est obtenue avant de réaliser une nouvelle mesure à l'aide des magnétomètres du réseau, puis
b) le calcul (56) de la distance entre chaque magnétomètre et la position estimée de l'objet magnétique, puis
c) l'élimination (60, 72, 82) des Nᵢ magnétomètres les plus proches de cette position estimée en fonction des distances calculées lors de l'étape b), où Nᵢ est un nombre entier positif strictement inférieur à N, puis
d) la réalisation de la nouvelle mesure (84) du champ magnétique généré ou modifié par l'objet magnétique par chaque magnétomètre non éliminé, puis
e) la détermination (86) d'une nouvelle position ou d'une nouvelle orientation de l'objet magnétique à partir des nouvelles mesures des magnétomètres qui n'ont pas été éliminés et sans prendre en compte de nouvelles mesures réalisées par les magnétomètres éliminés, de sorte à obtenir une nouvelle localisation de l'objet magnétique.

2. Procédé selon la revendication 1, dans lequel l'élimination des Nᵢ magnétomètres les plus proches comprend pour chaque magnétomètre :
• la comparaison (58) de la distance calculée à un seuil prédéterminé Sb,
• l'élimination (60) de ce magnétomètre si la distance calculée est inférieure au seuil Sb, et dans le cas contraire, ce magnétomètre ne fait pas partie des Nᵢ magnétomètres éliminés suite à cette comparaison.

3. Procédé selon la revendication 2, dans lequel la détermination de la nouvelle position ou de la nouvelle orientation de l'objet magnétique est réalisée en approximant l'objet magnétique à un dipôle magnétique, et le seuil prédéterminé Sb est au moins deux fois supérieur à la plus grande dimension de l'objet magnétique et strictement inférieur à la plus grande distance séparant les deux magnétomètres les plus éloignés l'un de l'autre du réseau.

4. Procédé selon la revendication 1, dans lequel le nombre Nᵢ est une constante prédéterminée avant le début de l'étape c).

5. Procédé selon l'une quelconque des revendications précédentes, dans lequel l'étape c) comporte :
i) l'élimination des Nᵢ magnétomètres les plus proches de la position estimée, puis
ii) l'identification (66) des magnétomètres qui n'appartiennent pas au groupe de Nₚ magnétomètres, non éliminés lors de l'étape i), les plus proches de la position estimée de l'objet magnétique, où Nₚ est un nombre entier prédéterminé strictement positif et tel que Nᵢ+ Nₚ est strictement inférieur à N, et
iii) l'élimination (72) des magnétomètres ainsi identifiés.

6. Procédé selon l'une quelconque des revendications 1-4, dans lequel l'étape c) comporte :
i) l'élimination des Nᵢ magnétomètres les plus proches de la position estimée, puis
ii) l'identification (76) des magnétomètres qui n'appartiennent pas au groupe de Nₙ magnétomètres, non éliminés lors de l'étape i), mesurant les champs magnétiques de plus grande norme, où Nₙ est un nombre entier prédéterminé strictement positif et tel que Nᵢ+ Nₙ est strictement inférieur à N, et
iii) l'élimination (82) des magnétomètres ainsi identifiés.

7. Procédé selon l'une quelconque des revendications précédentes, dans lequel le procédé comporte une étape (51) d'identification des magnétomètres saturés à partir d'un signal caractéristique délivré uniquement par les magnétomètres saturés et d'élimination des magnétomètres saturés identifiés.

8. Procédé selon l'une quelconque des revendications précédentes, dans lequel lors de l'étape (84) de mesure, les magnétomètres éliminés ne sont pas alimentés.

9. Procédé selon l'une quelconque des revendications 1-7, dans lequel le procédé comprend le réglage de la fréquence d'acquisition d'une nouvelle mesure par les magnétomètres éliminés sur une valeur strictement inférieure à la valeur de la fréquence d'acquisition d'une nouvelle mesure par les magnétomètres non éliminés.

10. Procédé selon l'une quelconque des revendications précédentes, dans lequel la détermination (86) d'une nouvelle position ou d'une nouvelle orientation de l'objet magnétique est réalisée à partir des seules mesures des magnétomètres qui n'ont pas été éliminés.

11. Procédé selon l'une quelconque des revendications précédentes, dans lequel le procédé comporte en plus l'élimination des Nₑ magnétomètres les plus éloignés de la position estimée, où Nᵢ + Nₑ est un nombre entier positif strictement inférieur à N

12. Dispositif de localisation d'un objet magnétique mobile, ce dispositif comportant :
- un réseau de magnétomètres comportant N magnétomètres tri-axes (Mᵢⱼ) reliés mécaniquement les uns aux autres sans aucun degré de liberté pour conserver une distance connue entre chacun de ces magnétomètres, où N est un nombre entier supérieur ou égal à cinq,
- une unité électronique (30) de traitement apte à déterminer la position ou l'orientation de l'objet magnétique à partir des mesures des magnétomètres de ce réseau,
dans lequel l'unité électronique (30) est programmée pour réitérer les étapes suivantes :
a) estimer la position de l'objet magnétique par rapport au réseau de magnétomètres à partir de mesures des magnétomètres réalisées lors d'une précédente itération ou à partir d'une mesure d'un capteur distinct des magnétomètres du réseau de magnétomètres de sorte que cette estimation est obtenue avant de réaliser de nouvelle mesure à l'aide des magnétomètres du réseau, puis,
b) calculer la distance entre chaque magnétomètre et la position estimée de l'objet magnétique, puis
c) éliminer les Nᵢ magnétomètres les plus proches de cette position estimée en fonction des distances calculées lors de l'étape b), où Nᵢ est un nombre entier positif strictement inférieur à N, puis
d) acquérir la nouvelle mesure du champ magnétique généré ou modifié par l'objet magnétique réalisée par chaque magnétomètre non éliminé, puis
e) déterminer une nouvelle position ou une nouvelle orientation de l'objet magnétique à partir des nouvelles mesures des magnétomètres non éliminés et sans prendre en compte de nouvelles mesures réalisées par les magnétomètres éliminés, de sorte à obtenir une nouvelle localisation de l'objet magnétique.

13. Dispositif selon la revendication 12, dans lequel le nombre N est supérieur ou égal à seize et les magnétomètres sont disposés dans un même plan et répartis dans ce plan de manière à former plusieurs colonnes de magnétomètres parallèles les unes aux autres.

14. Dispositif selon la revendication 12 ou 13, dans lequel l'unité électronique (30) est programmée pour éliminer ces Nᵢ magnétomètres les plus proches en réalisant les opérations suivantes pour chaque magnétomètre :
• comparer (58) la distance calculée à un seuil prédéterminé S_{b},
• éliminer (60) ce magnétomètre si la distance calculée est inférieure au seuil S_{b}, et dans le cas contraire, ce magnétomètre ne fait pas partie des Nᵢ magnétomètres éliminés suite à cette comparaison,

## Patentansprüche

1. Verfahren zur Lokalisierung eines mobilen magnetischen Objekts, dieses Verfahren umfassend das Bestimmen der Position oder Ausrichtung des magnetischen Objekts anhand von Messungen eines Netzwerks von Dreiachsen-Magnetometern, dieses Netzwerk aufweisend N Dreiachsen-Magnetometer, die ohne Freiheitsgrad mechanisch miteinander verbunden sind, um einen bekannten Abstand zwischen diesen jeweiligen Magnetometern beizubehalten, wobei N eine Ganzzahl größer als fünf ist,
wobei dieses Verfahren das Wiederholen der folgenden Schritte aufweist:
a) das Schätzen (52) der Position des magnetischen Objekts bezogen auf das Netzwerk von Magnetometern anhand von Messungen der Magnetometer, die bei einer vorhergehenden Wiederholung durchgeführt wurden, oder anhand einer Messung eines separaten Sensors der Magnetometer des Netzwerks von Magnetometern, so dass diese Schätzung erhalten wird, bevor eine neue Messung mithilfe der Magnetometer des Netzwerks durchgeführt wird, dann
b) das Berechnen (56) des Abstands zwischen jedem Magnetometer und der geschätzten Position des magnetischen Objekts, dann
c) das Eliminieren (60, 72, 82) der Nᵢ Magnetometer, die dieser geschätzten Position am nächsten liegen, in Abhängigkeit von den Abständen, die beim Schritt b) berechnet wurden, wobei Nᵢ eine positive Ganzzahl ist, die streng kleiner als N ist, dann
d) das Durchführen der neuen Messung (84) des Magnetfelds, das durch das magnetische Objekt erzeugt oder verändert wurde, durch jedes Magnetometer, das nicht eliminiert ist, dann
e) das Bestimmen (86) einer neuen Position oder einer neuen Ausrichtung des magnetischen Objekts anhand der neuen Messungen der Magnetometer, die nicht eliminiert wurden, und ohne Berücksichtigung neuer Messungen, die durch die eliminierten Magnetometer durchgeführt wurden, um eine neue Lokalisierung des magnetischen Objekts zu erhalten.

2. Verfahren nach Anspruch 1, wobei das Eliminieren der Nᵢ am nächsten gelegenen Magnetometer für jedes Magnetometer Folgendes umfasst:
• das Vergleichen (58) des berechneten Abstands mit einem vorbestimmten Schwellenwert S_{b},
• das Eliminieren (60) dieses Magnetometers, wenn der berechnete Abstand niedriger als der Schwellenwert S_{b} ist, und im gegenteiligen Fall gehört dieses Magnetometer nicht zu den Nᵢ Magnetometern, die nach diesem Vergleich eliminiert werden.

3. Verfahren nach Anspruch 2, wobei das Bestimmen der neuen Position oder der neuen Ausrichtung des magnetischen Objekts durch Annähern des magnetischen Objekts an einen magnetischen Dipol durchgeführt wird und der vorbestimmte Schwellenwert S_{b} mindestens zweimal größer als die größte Abmessung des magnetischen Objekts und streng kleiner als der größte Abstand ist, der die zwei Magnetometer, die am weitesten voneinander entfernt sind, vom Netzwerk trennt.

4. Verfahren nach Anspruch 1, wobei die Zahl Nᵢ eine Konstante ist, die vor dem Beginn des Schritts c) vorbestimmt wird.

5. Verfahren nach einem der vorhergehenden Ansprüche, wobei der Schritt c) Folgendes aufweist:
i) das Eliminieren der Nᵢ Magnetometer, die der geschätzten Position am nächsten liegen, dann
ii) das Identifizieren (66) der Magnetometer, die nicht zu der Gruppe von Nₚ Magnetometern gehören, die beim Schritt i) nicht eliminiert werden, die der geschätzten Position des magnetischen Objekts am nächsten liegen, wobei Nₚ eine streng positive vorbestimmte Ganzzahl ist, und so, dass Nᵢ+ Nₚ streng kleiner als N ist, und
iii) das Eliminieren (72) der so identifizierten Magnetometer.

6. Verfahren nach einem der Ansprüche 1 bis 4, wobei der Schritt c) Folgendes aufweist:
i) das Eliminieren der Nᵢ Magnetometer, die der geschätzten Position am nächsten liegen, dann
ii) das Identifizieren (76) der Magnetometer, die nicht zu der Gruppe von Nₙ Magnetometern gehören, die beim Schritt i) nicht eliminiert werden, die die Magnetfelder größter Norm messen, wobei Nₙ eine streng positive vorbestimmte Ganzzahl ist, und so, dass Nᵢ+ Nₙ streng kleiner als N ist, und
iii) das Eliminieren (82) der so identifizierten Magnetometer.

7. Verfahren nach einem der vorhergehenden Ansprüche, wobei das Verfahren einen Schritt (51) des Identifizierens der gesättigten Magnetometer anhand eines charakteristischen Signals, das nur von den gesättigten Magnetometern geliefert wird, und des Eliminierens der identifizierten gesättigten Magnetometer aufweist.

8. Verfahren nach einem der vorhergehenden Ansprüche, wobei beim Schritt (84) des Messens die eliminierten Magnetometer nicht mit Strom versorgt werden.

9. Verfahren nach einem der Ansprüche 1 bis 7, wobei das Verfahren das Einstellen der Frequenz der Erfassung einer neuen Messung durch die eliminierten Magnetometer auf einen Wert, der streng kleiner als der Wert der Frequenz der Erfassung einer neuen Messung durch die nicht eliminierten Magnetometer ist, umfasst.

10. Verfahren nach einem der vorhergehenden Ansprüche, wobei das Bestimmen (86) einer neuen Position oder einer neuen Ausrichtung des magnetischen Objekts allein anhand der Messungen der Magnetometer durchgeführt wird, die nicht eliminiert wurden.

11. Verfahren nach einem der vorhergehenden Ansprüche, wobei das Verfahren zusätzlich das Eliminieren der Nₑ Magnetometer aufweist, die von der geschätzten Position am weitesten entfernt sind, wobei Nᵢ + Nₑ eine positive Ganzzahl ist, die streng kleiner als N ist.

12. Vorrichtung zur Lokalisierung eines mobilen magnetischen Objekts, diese Vorrichtung aufweisend:
- ein Netzwerk von Magnetometern, aufweisend N Dreiachsen-Magnetometer (Mᵢⱼ), die ohne Freiheitsgrad mechanisch miteinander verbunden sind, um einen bekannten Abstand zwischen diesen jeweiligen Magnetometern beizubehalten, wobei N eine Ganzzahl größer als oder gleich fünf ist,
- eine elektronische Verarbeitungseinheit (30), die geeignet ist, die Position oder Ausrichtung des magnetischen Objekts anhand der Messungen der Magnetometer dieses Netzwerks zu bestimmen,
wobei die elektronische Einheit (30) dafür programmiert ist, die folgenden Schritte zu wiederholen:
a) Schätzen der Position des magnetischen Objekts bezogen auf das Netzwerk von Magnetometern anhand von Messungen der Magnetometer, die bei einer vorhergehenden Wiederholung durchgeführt wurden, oder anhand einer Messung eines separaten Sensors der Magnetometer des Netzwerks von Magnetometern, so dass diese Schätzung erhalten wird, bevor eine neue Messung mithilfe der Magnetometer des Netzwerks durchgeführt wird, dann,
b) Berechnen des Abstands zwischen jedem Magnetometer und der geschätzten Position des magnetischen Objekts, dann
c) Eliminieren der Nᵢ Magnetometer, die dieser geschätzten Position am nächsten liegen, in Abhängigkeit von den Abständen, die beim Schritt b) berechnet wurden, wobei Nᵢ eine positive Ganzzahl ist, die streng kleiner als N ist, dann
d) Erfassen der neuen Messung des Magnetfelds, das durch das magnetische Objekt erzeugt oder verändert wurde, die durch jedes Magnetometer durchgeführt wird, das nicht eliminiert ist, dann
e) Bestimmen einer neuen Position oder einer neuen Ausrichtung des magnetischen Objekts anhand der neuen Messungen der Magnetometer, die nicht eliminiert wurden, und ohne Berücksichtigung neuer Messungen, die durch die eliminierten Magnetometer durchgeführt wurden, um eine neue Lokalisierung des magnetischen Objekts zu erhalten.

13. Vorrichtung nach Anspruch 12, wobei die Zahl N größer als oder gleich sechzehn ist und die Magnetometer in einer selben Ebene angeordnet und in dieser Ebene so verteilt sind, dass sie mehrere Kolonnen von Magnetometern bilden, die parallel zueinander sind.

14. Vorrichtung nach Anspruch 12 oder 13, wobei die elektronische Einheit (30) dafür programmiert ist, diese Nᵢ am nächsten gelegenen Magnetometer zu eliminieren, indem für jedes Magnetometer die folgenden Operationen durchgeführt werden:
• Vergleichen (58) des berechneten Abstands mit einem vorbestimmten Schwellenwert S_{b},
• Eliminieren (60) dieses Magnetometers, wenn der berechnete Abstand niedriger als der Schwellenwert S_{b} ist, und im gegenteiligen Fall gehört dieses Magnetometer nicht zu den Nᵢ Magnetometern, die nach diesem Vergleich eliminiert werden.

## Claims

1. Method for locating a moving magnetic object, this method comprising the determination of the position or of the orientation of the magnetic object from measurements of an array of tri-axial magnetometers, this array comprising N tri-axial magnetometers mechanically linked to one another with no degree of freedom to retain a known distance between each of these magnetometers, where N is an integer greater than five,
wherein this method comprises the reiteration of the following steps:
a) estimating (52) the position of the magnetic object relative to the array of magnetometers from measurements of the magnetometers made in a preceding iteration or from a measurement of a sensor distinct from the magnetometers of the array of magnetometers so that this estimation is obtained before making a new measurement using the magnetometers of the array, then
b) computing (56) the distance between each magnetometer and the estimated position of the magnetic object, then
c) eliminating (60, 72, 82) the Nᵢ magnetometers closest to this position estimated as a function of the distances computed in the step b), where Nᵢ is a positive integer strictly less than N, then
d) making the new measurement (84), by each non-eliminated magnetometer, of the magnetic field generated or modified by the magnetic object, then
e) determining (86) a new position or a new orientation of the magnetic object from the new measurements of the magnetometers which have not been eliminated and without taking into account new measurements made by the eliminated magnetometers, so as to obtain a new location of the magnetic object.

2. Method according to Claim 1, wherein the elimination of the Nᵢ closest magnetometers comprises, for each magnetometer:
• comparing (58) the computed distance to a predetermined threshold S_{b},
• eliminating (60) this magnetometer if the computed distance is less than the threshold S_{b}, and, if not, this magnetometer does not form part of the Nᵢ magnetometers eliminated following this comparison.

3. Method according to Claim 2, wherein the determination of the new position or of the new orientation of the magnetic object is made by approximating the magnetic object with a magnetic dipole, and the predetermined threshold S_{b} is at least two times greater than the greatest dimension of the magnetic object and strictly less than the greatest distance separating the two magnetometers furthest away from one another in the array.

4. Method according to Claim 1, wherein the number Nᵢ is a constant predetermined before the start of the step c).

5. Method according to any one of the preceding claims, wherein the step c) comprises:
i) eliminating the Nᵢ magnetometers closest to the estimated position, then
ii) identifying (66) the magnetometers which do not belong to the group of Nₚ magnetometers, not eliminated in the step i), closest to the estimated position of the magnetic object, where Nₚ is a strictly positive predetermined integer such that Nᵢ + Nₚ is strictly less than N, and
iii) eliminating (72) the duly identified magnetometers.

6. Method according to any one of Claims 1-4, wherein the step c) comprises:
i) eliminating the Nᵢ magnetometers closest to the estimated position, then
ii) identifying (76) the magnetometers which do not belong to the group of Nₙ magnetometers, not eliminated in the step i), measuring the magnetic fields of greater norm, where Nₙ is a strictly positive predetermined integer such that Nᵢ + Nₙ is strictly less than N, and
iii) eliminating (82) the duly identified magnetometers.

7. Method according to any one of the preceding claims, wherein the method comprises a step (51) of identifying saturated magnetometers from a characteristic signal delivered only by the saturated magnetometers and eliminating the identified saturated magnetometers.

8. Method according to any one of the preceding claims, wherein, in the measurement step (84), the eliminated magnetometers are not powered.

9. Method according to any one of Claims 1-7, wherein the method comprises the setting of the frequency of acquisition of a new measurement by the eliminated magnetometers to a value strictly less than the value of the frequency of acquisition of a new measurement by the non-eliminated magnetometers.

10. Method according to any one of the preceding claims, wherein the determination (86) of a new position or of a new orientation of the magnetic object is made from only the measurements of the magnetometers which have not been eliminated.

11. Method according to any one of the preceding claims, wherein the method further comprises the elimination of the Nₑ magnetometers furthest away from the estimated position, where Nᵢ + Nₑ is a positive integer strictly less than N.

12. Device for locating a moving magnetic object, this device comprising:
- an array of magnetometers comprising N tri-axial magnetometers (Mᵢⱼ) mechanically linked to one another with no degree of freedom to retain a known distance between each of these magnetometers, where N is an integer greater than or equal to five,
- an electronic processing unit (30) suitable for determining the position or the orientation of the magnetic object from the measurements of the magnetometers of this array,
wherein the electronic unit (30) is programmed to reiterate the following steps:
a) estimating the position of the magnetic object relative to the array of magnetometers from measurements of the magnetometers made in a preceding iteration or from a measurement of a sensor distinct from the magnetometers of the array of magnetometers so that this estimation is obtained before making a new measurement using the magnetometers of the array, then
b) computing the distance between each magnetometer and the estimated position of the magnetic object, then
c) eliminating the Nᵢ magnetometers closest to this position estimated as a function of the distances computed in the step b), where Nᵢ is a positive integer strictly less than N, then
d) acquiring the new measurement, made by each non-eliminated magnetometer, of the magnetic field generated or modified by the magnetic object, then
e) determining a new position or a new orientation of the magnetic object from the new measurements of the non-eliminated magnetometers and without taking into account new measurements made by the eliminated magnetometers, so as to obtain a new location of the magnetic object.

13. Device according to Claim 12, wherein the number N is greater than or equal to sixteen and the magnetometers are arranged in one and the same plane and distributed in this plane so as to form several columns of magnetometers that are parallel to one another.

14. Device according to Claim 12 or 13, wherein the electronic unit (30) is programmed to eliminate these Nᵢ closest magnetometers by performing the following operations for each magnetometer:
• comparing (58) the computed distance to a predetermined threshold S_{b},
• eliminating (60) this magnetometer if the computed distance is less than the threshold S_{b}, and, if not, this magnetometer does not form part of the Nᵢ magnetometers eliminated following this comparison.
